# DEMANDE DE BREVET EUROPEEN

(11) **EP 2 128 811 A1**
(43) Date de publication de la demande: **02.12.2009**
(21) Numéro de dépôt: 09160960.2
(22) Date de dépôt: 25.05.2009
(51) Int. Cl.: G06Q 30/00

(54) **Procédé et système de mesure de l'impact d'une annonce publicitaire sur un panneau d'affichage**

(30) Priorité: 29.05.2008 FR 0853522
(71) Demandeur: Alcatel Lucent, 75008 Paris (FR)
(72) Inventeur: Hedarchet, Stéphane, 75008 PARIS (FR)
(74) Mandataire: Hedarchet, Stéphane

(57) **Abrégé**

L'invention concerne un procédé de mesure de l'impact d'une annonce publicitaire relative à un produit ou à un service, affichée sur au moins un panneau d'affichage (1). Selon le procédé de l'invention, l'identité d'au moins une personne (4) passant à proximité dudit panneau d'affichage (1) dans une zone (Z1) géographique et pendant une période de temps données, à partir d'au moins une transmission sans fil d'un identifiant contenu dans au moins un dispositif (41, 42, 43) portatif susceptible d'être porté par ladite personne (4), est récupérée et mémorisée. Puis, pour chaque identité mémorisée, toute action réalisée par ladite personne identifié, parmi une liste prédéfinie d'actions connexes audit produit ou audit service, est récupérée, et un calcul d'un score global représentatif de l'impact de ladite annonce à partir de scores élémentaires prédéfinis associés audites actions connexes, est alors effectué.

## Description

La présente invention se rapporte au domaine de l'affichage publicitaire, en particulier à un procédé et à un système de mesure de l'impact d'une annonce publicitaire relative à un produit ou service sur au moins un panneau d'affichage.

Les campagnes publicitaires d'aujourd'hui utilisent de nombreux moyens disparates afin de toucher le plus grand nombre de personnes. Les différents moyens peuvent être, entre autres, des spots publicitaires diffusés sur des programmes de télévision ou de radio, des encarts sur des quotidiens nationaux
ou des annonceurs locaux, des annonces sur des sites Internet ou des tracts déposés dans les boîtes aux lettres. Un des moyens les plus classiques reste cependant les panneaux publicitaires implantés dans des zones géographiques supposées stratégiques.

Quel que soit le mode choisi, il est important, compte tenu des coûts associés à une campagne publicitaire, que les agences de communication puissent connaître l'impact de ces campagnes sur de potentiels consommateurs du produit ou utilisateurs du service.

Dans le cas des campagnes d'affichage sur des panneaux publicitaires, les emplacements sont généralement choisis en fonction de la forte affluence de personnes susceptibles de passer à proximité de ces emplacements. Selon le thème abordé sur l'affiche, l'emplacement peut également être choisi en fonction d'un type de zone tel qu'un quartier d'affaire ou une zone résidentielle. Pour autant, ces choix sont effectués a priori et il pourrait être intéressant de vérifier que le choix des emplacements est judicieux tout au long de la campagne d'affichage en mesurant régulièrement l'impact des différents emplacements sur des consommateurs ou utilisateurs potentiels.

La méthode la plus connue pour déterminer l'impact d'une campagne d'affichage publicitaire consiste à soumettre un questionnaire à un échantillon de personnes et à faire des statistiques sur les réponses obtenues. Cependant, cette méthode possède de nombreux désavantages. D'une part, elle nécessite de déployer des moyens humains importants. Il faut en effet faire appel à des équipes d'experts pour établir un questionnaire pertinent, à des équipes de démarchage telles que des standardistes dans des centres d'appel téléphonique
ou des personnes déployées sur des lieux de grandes affluences pour pouvoir soumettre le questionnaire au plus grand nombre de personnes possible et récupérer un maximum de réponses.

D'autre part, les personnes ainsi questionnées ne sont pas toujours correctement ciblées ou disponibles pour répondre à de tels questionnaires. Leurs réponses ne sont pas toujours franches, il est souvent très difficile de déterminer la cause exacte d'un achat par une personne questionnée. Ainsi, l'analyse des réponses à de tels questionnaires ne peut pas servir à déterminer avec exactitude l'impact d'une campagne d'affichage publicitaire. De plus, l'organisation d'un tel sondage est longue car il faut questionner un nombre significatifs de personnes, rassembler les questionnaires remplis et corréler l'ensemble des réponses. Ainsi les résultats sont généralement obtenus bien après que la campagne d'affichage n'ait eu lieu.

Enfin, ce type de sondage n'est clairement pas adapté pour permettre aux agences de publicité de savoir si les emplacements pour diffuser une publicité ont été correctement choisis.

Parallèlement ou de façon complémentaire à la méthode classique de mesure par sondage, les agences de communications font également recours à la télémétrie. Des personnes ayant au préalable accepté d'être équipées à leur domicile d'un équipement particulier, peuvent alors contribuer activement ou passivement à la mesure de l'impact des spots publicitaires diffusés sur leur poste de télévision.

De tels équipements sont adaptés pour personnaliser les affichages publicitaires en fonction des programmes télévisuels visionnés par les utilisateurs équipés ou bien pour mesurer l'impact des émissions de téléshopping. Néanmoins, ils ne peuvent pas être utilisés pour mesurer l'impact d'une annonce diffusée sur un panneau d'affichage conventionnel.

Aujourd'hui il n'existe donc pas de système de mesure permettant de fournir à une agence de communication une mesure en temps réel de l'impact d'une affiche au niveau d'un emplacement donné.

La présente invention vise à offrir plus de réactivité et de précision aux agences de communication en leur proposant de vérifier, en temps réel et sans nécessiter de questionner les consommateurs, l'impact de leurs différentes affiches situées sur des emplacements particuliers.

Dans ce but, un premier objet de l'invention concerne un procédé de mesure de l'impact d'une annonce publicitaire relative à un produit ou à un service, affichée sur au moins un panneau d'affichage, **caractérisé en ce qu**'il comporte les étapes suivantes :
- dans un premier temps, récupération au niveau d'un serveur de l'identité d'au moins une personne passant à proximité dudit panneau d'affichage dans une zone géographique et pendant une période de temps données, à partir d'au moins une transmission sans fil d'un identifiant contenu dans au moins un dispositif portatif susceptible d'être porté par ladite personne, et mémorisation de l'identité ;
- dans un second temps, récupération par ledit serveur, pour chaque identité mémorisée, de toute action ultérieure réalisée par ladite personne identifiée, parmi une liste prédéfinie d'actions connexes audit produit ou audit service, et calcul d'un score global représentatif de l'impact de ladite annonce à partir de scores élémentaires prédéfinis associés audites actions connexes.

De préférence, lesdites actions connexes comprennent une transaction bancaire électronique, une connexion sur un site Internet, ou une présence dans un établissement.

Avantageusement, lors de l'étape de récupération de l'identité de ladite personne, l'instant de passage de ladite personne à proximité dudit panneau d'affichage est également récupéré, et, lors de l'étape de récupération de l'action connexe, l'instant de réalisation de l'action est également récupéré, et le score élémentaire associé à l'action est pondéré en fonction du temps écoulé entre l'instant de passage de ladite personne et l'instant de réalisation de ladite action.

Un second objet de l'invention concerne un système de mesure de l'impact d'une annonce publicitaire relative à un produit ou à un service, affichée sur au moins un panneau d'affichage **caractérisé en ce qu**'il comprend un serveur comprenant :
- des premiers moyens de récupération de l'identité d'au moins une personne passant à proximité dudit panneau d'affichage dans une zone géographique et pendant une période de temps données, à partir d'au moins une transmission sans fil d'un identifiant contenu dans au moins un dispositif portatif susceptible d'être porté par ladite personne ;
- des premiers moyens de stockage pour stocker toute d'identité récupérée ;
- des seconds moyens de stockage pour stocker une liste prédéfinie d'actions connexes audit produit ou audit service ;
- des seconds moyens de récupération, pour chaque identité stockée, de toute action ultérieure réalisée par ladite personne identifiée, parmi une liste prédéfinie d'actions connexes audit produit ou audit service ;
- des moyens de calcul pour calculer un score global représentatif de l'impact de ladite annonce à partir de scores élémentaires prédéfinis associés audites actions connexes Avantageusement, le panneau d'affichage comprend un lecteur RFID et/ou un émetteur/récepteur WIFI pour récupérer ledit identifiant et le transmettre audit serveur par voie filaire ou par une liaison sans fil.

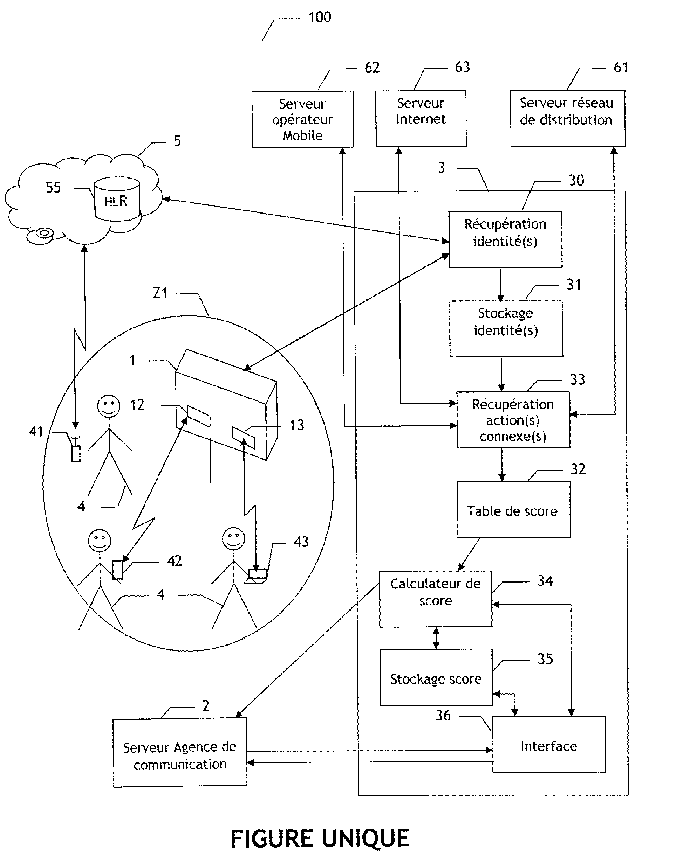

D'autres caractéristiques et avantages de l'invention apparaîtront à la lecture de la description qui va suivre en référence à la figure unique annexée.

L'unique figure représente schématiquement une architecture préférée d'un système pour l'implémentation d'un procédé de mesure de l'impact d'une annonce publicitaire affichée sur un panneau 1 d'affichage conformément à l'invention.

Comme présenté sur la figure unique, un système 100 de mesure de l'impact d'une annonce publicitaire permet à un serveur 2 d'une agence de communication de récupérer un score représentatif de l'impact de ladite annonce en se mettant en relation avec un serveur 3 de gestion de score.

Le serveur 3 est adapté pour récupérer de façon régulière, par exemple périodiquement, une première information d'identité de toute personne 4 passant à proximité du panneau d'affichage 1 dans une zone Z1 géographique et pendant une période de temps données.

La présente invention part de l'hypothèse que statistiquement la plupart des personnes portent sur elles en permanence des dispositifs contenant un identifiant qui permet de les identifier de façon unique. A titre d'exemple non limitatif, ces dispositifs peuvent être des téléphones portables, des titres de transport électroniques comportant des émetteurs RFID ou bien des ordinateurs portables munis d'un modem WIFI. En se référant aux dispositifs mentionnés ci-dessus, le module 30 comporte donc un émetteur/récepteur RFID à rayonnement actif et/ou une borne WIFI.

Afin de permettre d'identifier le plus grand nombre de personnes passant à proximité d'un panneau d'affichage et de faire ainsi une mesure d'efficacité plus précise et plus pertinente, le serveur 3 comporte un module 30 de récupération d'identité adapté pour récupérer des informations contenues dans les différents types de dispositifs portatifs susceptibles d'être portés par les personnes.

Dans le cas où la personne se déplace avec un téléphone portable 41, le module 20 de récupération pourra récupérer l'identité de la personne 4 par l'intermédiaire du réseau 5 de téléphonie cellulaire.

Plus précisément, pour fonctionner, le téléphone portable d'une personne contient une puce généralement appelée carte SIM qui contient un ensemble d'identifiants dont l'IMSI (International Mobile Subscriber Identity). Lorsqu'il est allumé, le téléphone portable 41 échange en permanence des informations de signalisation avec des composantes du réseau 5 de téléphonie cellulaire auquel il appartient via des stations de bases. Grâce à cet échange (par le biais des informations Cell-Id), le réseau 5 de téléphonie cellulaire sait, à tout instant, dans quelle cellule se trouve le téléphone portable 41.

Par ailleurs, le réseau 5 de téléphonie cellulaire comporte une correspondance entre le téléphone et l'identité de l'abonné dans la base de données du HLR 55. Ainsi en combinant les informations émises par le téléphone portable 41 activé et porté par la personne 4 et les données relatives aux abonnements, le réseau de téléphonie cellulaire connaît l'identité et la position de la personne 4 à une période donnée.

Afin de tirer partie d'une telle connaissance, le module 30 de récupération d'identité cellulaire peut requêter périodiquement auprès du réseau 5 pour que ce dernier lui fournisse les identités de toutes les personnes 4 dont le téléphone portable 41 s'est trouvé pendant une période donnée proche du panneau d'affichage 1.

Dans un mode de réalisation préféré, le module 30 de récupération d'identité peut demander au réseau 5 de téléphonie cellulaire de lui transmettre régulièrement l'ensemble des identités des personnes présentes dans la cellule du réseau 5 dans laquelle se situe le panneau d'affichage 1. Ladite zone géographique Z1 correspond alors à la cellule du réseau 5 de téléphonie cellulaire dans laquelle se trouve le panneau d'affichage.

Dans le cas où l'on souhaite identifier la personne 4 en utilisant des informations contenues dans un badge RFID 42, comme par exemple un titre de transport électronique, l'invention prévoit de munir le panneau d'affichage 1 d'un lecteur RFID 12. Un tel type de titre de transport électronique comporte généralement des informations telles que les droits d'utilisation des transports par la personne, la période d'utilisation et l'identité du porteur du titre. Ces informations peuvent être lues par un lecteur RFID adéquat. Ainsi l'identité de toute personne 4 passant à proximité du panneau 1 et détenteur d'un tel badge RFID 42 sera détectée grâce au lecteur 12. Ladite zone géographique Z1 correspond dans ce cas à la portée du lecteur 12 RFID présent sur le panneau d'affichage 4.

La personne 4 peut également posséder sur elle, un dispositif 43 tel qu'un ordinateur portable muni d'un modem capable d'émettre et de recevoir des signaux WIFI. Dans ce cas, l'invention prévoit d'équiper le panneau d'affichage 1 d'un émetteur/récepteur 13 de signaux WIFI afin de pouvoir récupérer un identifiant de la personne 4 lors d'une transmission WIFI avec ledit dispositif 43 portatif. Ladite zone géographique Z1 peut dans ce cas correspondre à la portée de l'émetteur/récepteur 13 WIFI équipant le panneau d'affichage 1.

Lorsque l'identifiant est récupéré par le panneau d'affichage 1, il doit alors être transmis au module 30 de récupération d'identité. La transmission s'effectue par tout moyen de communication filaire ou sans fil. Le module 30 de récupération peut récupérer périodiquement les identifiants stockés dans le détecteur RFID et/ou WIFI du panneau d'affichage 1, ou ces détecteurs servent eux-mêmes, lors de chaque récupération d'un identifiant, à transmettre celui-ci directement au module 30 de récupération.

Quelle que soit la méthode utilisée pour récupérer l'identité des personnes, parmi les méthodes explicitées ci-avant utilisées alternativement ou en combinaison, l'identité récupérée est alors stockée, par exemple, au niveau d'un moyen de stockage ou d'une base de données 31 du serveur 3.

Ce moyen 31 de stockage peut être dédié audit panneau d'affichage 1. Ce moyen de stockage 21 contient alors une liste d'identités de personnes ayant été à proximité dudit panneau d'affichage 1 pendant une période de temps donnée et donc ayant vu l'annonce affichée. En variante, le moyen de stockage 31 sert de préférence à stocker plusieurs listes d'identités de personnes détectées à proximité d'une pluralité de panneaux d'affichage 1 diffusant la même annonce.

Une annonce publicitaire est généralement jugée efficace si elle a réussi à provoquer une envie ou un besoin chez la personne l'ayant visualisée. Ainsi une mesure de l'impact de l'annonce publicitaire positionnée sur ce panneau d'affichage 1 peut être réalisée en détectant un éventuel changement de comportement des personnes 4 dont l'identité est contenue dans le moyen 31 de stockage d'identités. Afin de mesurer l'impact de cette annonce positionnée sur le panneau, la présente invention prévoit de définir une liste d'actions connexes au produit ou au service puis de récupérer, dans la mesure du possible, l'ensemble des actions connexes à l'annonce, réalisées par les personnes de ladite liste.

Seules les actions connexes, c'est-à-dire les actions ayant un lien direct avec le produit ou le service exposé sur l'annonce publicitaire doivent être récupérées. Le lien peut être direct et peut alors consister en une transaction telle que l'achat du produit, la souscription du service. Le lien peut également être indirect et consister en une demande d'information sur le produit ou le service à partir d'une connexion à un site Internet, le déplacement de la personne dans un lieu susceptible d'exposer, vendre ou contenir des renseignement sur ledit produit ou le dit service.

La présente invention part du constat que la plupart des actions connexes nécessitent que la personne les réalisant s'identifie. En effet, souvent :
- une transaction sera réglée par une personne au moyen d'un mode de paiement électronique tel qu'une carte paiement contenant l'identité de la personne;
- une demande d'information se fera sur un site Internet nécessitant une authentification ;
- un déplacement dans un lieu spécialisé pourra être détecté grâce notamment à des bornes de contrôle d'entrée/sortie adaptées pour récupérer l'identité des visiteurs.

Pour chaque annonce affichée, le serveur 3 dispose d'un moyen de stockage 32 appelé table de score regroupant une liste des actions connexes susceptibles d'être réalisées par les personnes 4 ayant vu l'affiche. Cette liste peut avantageusement être incrémentée par l'agence de communication à chaque modification de l'annonce sur le panneau d'affichage 1.

Pour déterminer la réalisation de telles actions par une personne 4 étant passée à proximité dudit panneau 1, le serveur 3 comprend des moyens de récupération de toute action connexe réalisée par la dite personne ultérieurement à la récupération de son identité par les moyens 30 de récupération d'identité.

Plus précisément, la liste des identités contenue dans les moyens 31 de stockage d'identité peut être transmise régulièrement aux moyens 33 de récupération d'action. Pour chaque identité contenue dans la liste, les moyens 31 de récupération d'action sont adaptés pour détecter la réalisation par la personne identifiée de toutes les actions contenues dans la liste d'actions connexes stockée dans la table de score 32.

Comme précédemment mentionné, les actions connexes peuvent être de plusieurs types. Ainsi lorsque ladite action connexe réalisée par ladite personne identifiée est une transaction pour l'achat du produit ou la souscription à du service, ladite action connexe est récupérée lors de la réalisation d'un paiement électronique. Le paiement bancaire électronique peut être effectué par l'utilisation d'une carte de paiement dans un magasin, auquel cas les moyens 33 de récupération d'action sont adaptés pour récupérer les transactions effectuées sur un serveur 61 de gestion d'un magasin recensant, entre autre, l'ensemble des transactions ayant eu lieu dans le magasin. Le paiement électronique peut également être effectué au moyen d'un terminal mobile tel qu'un terminal GPRS, auquel cas les moyens 33 de récupération d'action sont adaptés pour récupérer les transactions effectuées sur un serveur 62 de gestion d'un opérateur de téléphonie mobile.

Ladite action connexe peut également être une connexion à un site Internet relatif au produit ou au service affiché par l'annonce. Dans un tel cas, la récupération de l'action pourra se faire par l'intermédiaire de la récupération d'un historique des connexions d'utilisateurs s'étant connectés à un instant donnée sur le site. Les moyens 33 de récupération d'action sont alors adaptés pou récupérer de tels historiques présents sur des serveurs 63 Internet.

Parallèlement, ou en plus d'une transaction ou d'une demande d'information sur un site Internet, la personne peut également se rendre dans un magasin, un office de tourisme ou une agence pour demander des informations
ou pour simplement appréhender de façon plus précise le produit ou le service présenté par l'annonce. Dans un tel cas, la récupération de l'action pourra se faire par l'intermédiaire de la récupération d'un historique des entrée/sortie dans le magasin, l'office de tourisme ou l'agence. Avantageusement, la détection des entrées/sorties pourra être effectuée, dans de tels emplacements, par l'utilisation de bornes de présences adaptées pour récupérer l'identifiant du dispositif susceptible d'être porté par ladite personne. Les moyens 33 de récupération d'action sont alors adaptés pou récupérer de tels historiques présents sur des serveurs 61 de gestion de magasin.

Lorsque les moyens 33 de récupérations récupèrent, pour une identité contenue dans le moyen 21 de stockage d'identité, une action connexe, ils transmettent cette action à des moyens 34 de calculs calculant un score global représentatif de l'impact de ladite annonce.

Plus précisément, chaque action connexe contenue dans la table de score 32 se voit associer par l'agence de communication un score élémentaire. Ce score élémentaire permet de classer les actions connexes. Par exemple, un achat du produit ou une souscription au service présenté sur l'annonce traduira un fort impact de l'annonce sur la personne 4 l'ayant visualisée. Une telle action connexe possédera donc un score élémentaire associé élevé. Au contraire, la simple demande de renseignements sur le produit ou le service peut traduire que la personne 4 a bien été influencée par l'annonce mais que cette dernière ne l'a pas pleinement convaincue, l'impact sur la personne 4 a bien eu lieu mais n'a pas été déterminant. Un score élémentaire faible est alors attribué à une telle action.

Lorsque l'annonce publicitaire vient d'être posée sur le panneau d'affichage, le score global représentatif de l'impact de ladite annonce est fixé à zéro. Chaque fois que les moyens 33 de récupération d'action transmettent une action connexe aux moyens de calcul 34, ces derniers incrémentent le score global du score élémentaire associé à l'action connexe récupérée. Le score global est alors mis à jour continuellement en temps réel jusqu'à la fin de la campagne d'affichage.

Dans un mode de réalisation préféré, le score élémentaire associé à l'action est pondéré en fonction du temps écoulé entre l'instant de passage de la personne 4 dans la zone géographique Z1 de proximité du panneau d'affichage et l'instant de la réalisation de l'action. Cette pondération pourra affiner la mesure, en ce sens qu'elle pourra donner une indication sur la force de l'impact de l'annonce sur la personne 4 l'ayant visualisée. En effet, si la personne achète le produit rapidement après avoir vu l'annonce, il peut être considéré que l'annonce a très fortement influencé le comportement de ladite personne 4.

Pour pouvoir mettre en oeuvre une telle pondération :
- les moyens de récupérations 30 d'identité sont adaptés pour également récupérer l'instant de passage de la personne 4 à proximité dudit panneau d'affichage 1 ;
- les moyens 33 de récupération d'action sont adaptés pour récupérer l'instant de réalisation de l'action connexe.
- Les moyens 34 de calcul sont adaptés pour effectuer la différence entre les deux instants afin de déterminer le temps écoulé entre le passage à proximité du panneau et la réalisation de l'action.

Avantageusement, le serveur 2 peut stocker dans les moyens de stockage 35 des résultats de mesures effectués sur le même panneau 1 pour des annonces relatives au même produit ou service d'une campagne d'affichage antérieure. Ces mesures d'impact antérieures pourront être utilisées pour pondérer le score global. Une telle pondération pourra permettre aux agences de communication de tenir compte de l'effet encore existant sur les personnes 3 d'éventuelles campagnes d'affichage effectuées auparavant.

En variante ou en combinaison, le score global peut être également pondéré à partir de lois statistiques ou extrapolations effectués à partir de moyens d'analyse statistiques et/ou de moyens d'extrapolation contenues dans les moyens 35 de stockage de score. Ces différents moyens d'analyse statistique et/ou d'extrapolation, connus de l'homme du métier, permettront d'affiner le résultat obtenu à partir des scores élémentaires, notamment dans les cas où peu de personnes seront passées devant le panneau d'affichage 1.

A chaque fois que le score global est mis à jour, le serveur 3 est adapté pour transmettre le nouveau score global à l'agence de communication supervisant la campagne d'affichage. Une telle transmission pourra permettre à l'agence de communications d'adapter la diffusion des annonces sur les panneaux d'affichage tout au long de la campagne ou de commander plus rapidement une nouvelle annonce si les résultats de la mesure de l'impact sont décevants.

Dans un mode préféré de réalisation, l'agence de communication peut consulter, au moyen d'une interface 36 disponible sur le serveur 3, le score global pour une période particulière de la campagne d'affichage ou le score global d'une ancienne campagne d'affichage. Une telle possibilité permettra une comparaison aisée de l'impact de plusieurs campagnes successives sur le même panneau d'affichage.

Bien que les différentes caractéristiques et avantages de l'invention aient été décrits en se référant à un système de mesure ne comportant qu'un panneau d'affichage, l'invention n'est pas limitée à un tel système. L'invention peut également être implémentée dans un système comportant une pluralité de panneaux d'affichage affichant la même annonce, ou encore des annonces distinctes.

## Revendications

1. Procédé de mesure de l'impact d'une annonce publicitaire relative à un produit ou à un service, affichée sur au moins un panneau d'affichage (1), **caractérisé en ce que** qu'il comporte les étapes suivantes :
- dans un premier temps, récupération de l'identité d'au moins une personne (4) passant à proximité dudit panneau d'affichage (1) dans une zone (Z1) géographique et pendant une période de temps données, à partir d'au moins une transmission sans fil d'un identifiant contenu dans au moins un dispositif (41, 42, 43) portatif susceptible d'être porté par ladite personne (4), et mémorisation de l'identité ;
- dans un second temps, récupération, pour chaque identité mémorisée, de toute action ultérieure réalisée par ladite personne identifiée, parmi une liste prédéfinie d'actions connexes audit produit ou audit service, et calcul d'un score global représentatif de l'impact de ladite annonce à partir de scores élémentaires prédéfinis associés audites actions connexes.

2. Procédé selon la revendication 1, **caractérisé en ce que,** ledit dispositif portatif étant un téléphone portable (41) permettant d'accéder à un réseau (5) de communication cellulaire, ledit identifiant est récupéré par l'intermédiaire dudit réseau (5) de communication cellulaire.

3. Procédé selon l'une quelconque des revendications précédentes, **caractérisé en ce que,** ledit dispositif portatif étant équipé d'un modem WIFI (43), ou d'un émetteur RFID (42), ledit identifiant est récupéré par l'intermédiaire d'une transmission sans fil vers ledit panneau d'affichage (1).

4. Procédé selon l'une quelconque des revendications précédentes, **caractérisé en ce que** les actions connexes comprennent une transaction bancaire électronique, une connexion sur un site Internet, ou une présence dans un établissement.

5. Procédé selon la revendication 4, **caractérisé en ce que,** ladite action connexe réalisée étant une connexion sur un site Internet, cette action connexe est récupérée par l'intermédiaire d'un historique de connexions d'utilisateurs sur ledit site.

6. Procédé selon la revendication 4, **caractérisé en ce que**, ladite action connexe réalisée étant une présence dans un établissement, cette action connexe est récupérée par l'intermédiaire d'un système de détection dudit dispositif portatif susceptible d'être portée par ladite personne (4) dans ledit établissement.

7. Procédé selon l'une quelconque des revendications précédentes, **caractérisé en ce que,** lors de l'étape de récupération de l'identité de ladite personne (4), l'instant de passage de ladite personne (4) à proximité dudit panneau d'affichage (1) est également récupéré, **en ce que**, lors de l'étape de récupération de l'action connexe, l'instant de réalisation de l'action est également récupéré, et **en ce que**, le score élémentaire associé à l'action est pondéré en fonction du temps écoulé entre l'instant de passage de ladite personne (4) et l'instant de réalisation de ladite action.

8. Procédé selon l'une quelconque des revendications précédentes,
**caractérisé en ce que** le score global est, en outre, fonction de lois statistiques et/ou d'extrapolations effectuées à partir de moyens d'analyse statistique et/ou de moyens d'extrapolation.

9. Système de mesure de l'impact d'une annonce publicitaire relative à un produit ou à un service, affichée sur au moins un panneau d'affichage (4)
**caractérisé en ce qu'**il comprend un serveur (3) comprenant :
- des premiers moyens (30) de récupération de l'identité d'au moins une personne (4) passant à proximité dudit panneau d'affichage (1) dans une zone (Z1) géographique et pendant une période de temps données, à partir d'au moins une transmission sans fil d'un identifiant contenu dans au moins un dispositif (41, 42 , 43) portatif susceptible d'être porté par ladite personne (4);
- des premiers moyens (31) de stockage pour stocker toute d'identité récupérée ;
- des seconds moyens (32) de stockage pour stocker une liste prédéfinie d'actions connexes audit produit ou audit service ;
- des seconds moyens (33) de récupération, pour chaque identité stockée, de toute action ultérieure réalisée par ladite personne identifiée, parmi une liste prédéfinie d'actions connexes audit produit ou audit service ;
- des moyens de calcul (34) pour calculer un score global représentatif de l'impact de ladite annonce à partir de scores élémentaires prédéfinis associés audites actions connexes.

10. Système selon la revendication 9, **caractérisé en ce que** le panneau d'affichage (1) comprend un lecteur RFID (12) et/ou un émetteur/récepteur WIFI (13) pour récupérer ledit identifiant et **en ce que** ledit lecteur RFID et ledit émetteur/récepteur WIFI transmettent l'identifiant audit serveur (3) par voie filaire ou par une liaison sans fil.

11. Système selon l'une quelconque des revendications 9 ou 10, **caractérisé en ce que** les moyens (30) de récupération de l'identité d'une personne sont adaptés pour récupérer des données stockées dans un dispositif (5) appartenant à un réseau de communication cellulaire ou pour récupérer des données stockées au niveau du panneau d'affichage (1).

12. Système selon l'une quelconque des revendications 9 à 11, **caractérisé en ce que** les moyens de récupération (33) d'une action sont adaptés pour récupérer des données stockées dans au moins un dispositif (61, 62, 63) externe au serveur (3) tel que notamment un serveur (62) appartenant à un opérateur de téléphonie, un serveur (63) Internet, ou un serveur (61) de gestion d'un magasin ou d'une chaîne de distribution.
